# EUROPÄISCHE PATENTSCHRIFT

(11) **EP 0 735 798 B1**
(45) Veröffentlichungstag und Bekanntmachung des Hinweises auf die Patenterteilung: **11.08.1999**
(21) Anmeldenummer: 96105120.8
(22) Anmeldetag: 29.03.1996
(51) Int. Cl.: H05B 39/04

(54) **Dämmerungsschalter für Lampen**
Ambient-light lamp circuit
Circuit de lumière ambiante pour lampes

(30) Priorität: 31.03.1995 DE 19512182
(43) Veröffentlichungstag der Anmeldung: 02.10.1996
(73) Patentinhaber: Korte, Heinrich, D-26810 Ihrhove (DE)
(72) Erfinder: Korte, Hans-Peter, D-26817 Rhauderfehn (DE)
(74) Vertreter: Herrmann-Trentepohl, Werner, Dipl.-Ing.

(56) Entgegenhaltungen:
- EP-A- 0 505 287
- US-A- 3 989 980

## Beschreibung

Die vorliegende Erfindung bezieht sich auf einen Dämmerungsschalter für Lampen mit einem Photoelement, das bei einem Absinken der Umgebungshelligkeit unter einen Schwellwert einen Schaltvorgang auslöst.

Aus dem Stand der Technik sind gattungsgemäße Dämmerungsschalter bekannt, die jedoch entweder technisch sehr kompliziert und damit wartungsanfällig oder nur für bestimmte Betriebsbedingungen geeignet sind. Problematisch ist ferner die bei häufigem Schalten nur kurze Lebensdauer der Last (z.B. ein Leuchtkörper).

Es ist die Aufgabe der vorliegenden Erfindung, einen Dämmerungsschalter für Lampen zu schaffen, der einfach und kostengünstig herzustellen und vielseitig verwendbar ist.

Die Aufgabe wird mit einem Dämmerungsschalter für Lampen gemäß Anspruch 1 gelöst. Vorteilhafte Ausführungsformen sind in den Unteransprüchen gekennzeichnet.

Durch die elektronische Einschaltstrombegrenzung wird auf schaltungstechnisch einfache Weise eine deutliche Erhöhung der Lebensdauer der Last (Glühbirne, Lade-Elko in Energiesparleuchten etc.) erreicht. Der erfindungsgemäße Dämmerungsschalter für Lampen kann ferner in vorteilhafter Weise in kleiner Ausführung (SMD-Bestückung möglich) mit geringem Leistungsbedarf besonders kostengünstig hergestellt werden.

Nach einer weiteren Variante der Erfindung wird eine elektronische Kurzschlußsicherung für den Lastkreis realisiert (bevorzugt reversibel ausgelegt). Bevorzugt ist die Kurzschlußsicherung des Dämmerungsschalters derart ausgelegt, daß bei jeder neuen Hell/Dunkelperiode elektronisch geprüft wird, ob eine Überlast anliegt. Auf diese Weise werden Kurzschlußübertritte aller Art sicher vermieden. Die elektronische Kurzschlußsicherung wird ferner bevorzugt derart ausgelegt, daß bei einer Störung die Abschaltgeschwindigkeit von der Höhe der Überlast abhängt und/oder daß sie beim Abtrennen der Last (Leuchtmittelwechsel) und/oder beim Aus-/Einschalten deaktiviert wird.

Eine weitere besonders bevorzugte Variante der Erfindung zeichnet sich in vorteilhafter Weise durch eine Einrichtung zur Uberwachung der Verlustleistung des Leistungsschalters aus.

Ein weiterer Vorteil der Erfindung besteht darin, daß es möglich ist, die Ein/Ausschaltschwelle ab Werk unabhängig bzw. je nach Wunsch einzustellen. Der Schalter ist zudem in vorteilhafter Weise derart auslegbar, daß er unempfindlich gegen kurzzeitiges Fremdlicht ist (z.B. Autoscheinwerfer). Hervorzuheben ist ferner, daß die Erfindung prinzipiell für Lasten verschiedenster Art geeignet und auslegbar ist.

Im folgenden wird eine bevorzugte Ausführungsform in Bezug auf die Zeichnung näher beschrieben. Es zeigt:
- Fig. 1: einen Schaltplan eines erfindungsgemäßen Dämmerungsschalters für Lampen;

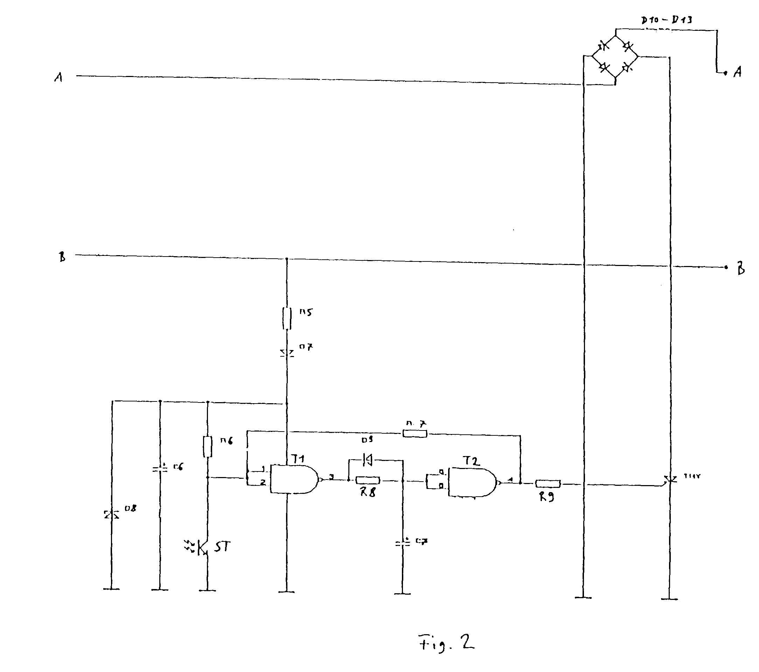

- Fig. 2: einen Dämmerungsschalter nach einem nicht vorveröffentlichten Stand der Technik, welcher derart ausgelegt ist, daß kurzzeitiger Lichteinfall den Schalter nicht auslöst.

### Schaltungsbeschreibung

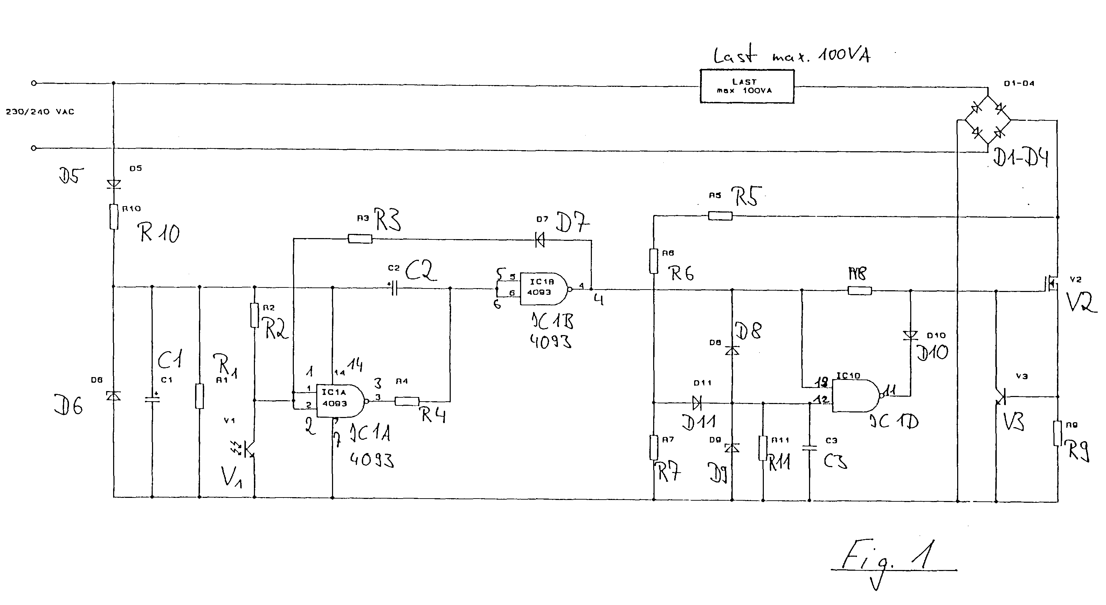

Wie in Fig. 1 zu erkennen, fließt über eine Diode D5 bei jeder positiven Halbwelle der (Wechsel)Netzspannung ein Ladestrom, der durch einen Widerstand R10 begrenzt wird, in den Glättungskondensator C1. Damit wird hier eine Spannung aufgebaut, die durch den Kondensator C1 geglättet und durch eine Zenerdiode D6 stabilisiert wird.

Die beiden Eingänge eines "NAND"-Schmitt-Triggers IC1A liegen an einem lichtabhängigen Spannungsteiler, gebildet aus einem Widerstand R2 (Einstellung der Einschaltschwelle) und einem Phototransistor V1. Bei Dunkelheit steigt die Spannung am Phototransistor V1 über den Wert der Schwellenspannung des Schmitt-Triggers IC1A, so daß dieser an seinem Ausgang PIN3 von High nach Low wechselt.

Diese Information muß, bedingt durch die Zeitkonstante R4*C2, ca. 5 Sekunden anliegen (Unterdrückung von Fremdlichtstörungen z.B. Autoscheinwerfer), um an IC1b PIN5 + PIN6 den Schwellwert der Schmitt-Trigger-Eingänge zu unterschreiten, so daß das IC1B am Ausgang PIN4 auf High wechselt und V2 über R8 Gate-Spannung bekommt und leitet. Auf diese Weise wird in unkomplizierter Weise ausgeschlossen, daß kurzzeitige Lichteinflüsse - z.B. hervorgerufen von Autoscheinwerfern - einen Schaltvorgang auslösen.

In Verbindung mit dem Brückengleichrichter, gebildet aus Dioden D1-D4, wird die Last von Wechselstrom durchflossen. Über eine Diode D7 gelangt jetzt ein Teilstrom, der mit einem Widerstand R3 eingestellt werden kann, auf den Eingang des IC1A in Verbindung mit V1 zurück, so daß V1 auch diesen Strom gegen Masse ziehen muß, um die untere Schaltschwelle der Schmitt-Trigger-Eingänge IC1A zu unterschreiten, d.h. mittels des Widerstandes R3 kann in einem weitem Bereich die Ausschaltschwelle eingestellt werden. Um sicherzustellen, daß die gesamte Elektronik immer mit einem definierten Anfangszustand beginnt (Last aus), wird nach jeder Trennung vom Netz C1 über R1 und C2, über R1/R4 und den Innenwiderstand IC1A/IC1B entladen. Dies bewirkt bei jedem Einschalten nach vorheriger Netztrennung grundsätzlich ein High-Signal am IC1B, hervorgerufen entweder durch den Ladestrom C2/R4 oder durch die Ansteuerung vom ICla (Hell), so daß der Ausgang des IC1B mit einem Low-Pegel beginnt (Last aus).

### Elektronische Strombegrenzung/Sicherung

Wird das MOSFET V2 durch den Dämmerungs-Schalter eingeschaltet, fließt ein Strom - Last/Brückengleichrichter D1-D4 - der einen proportionalen Spannungsabfall an einem Widerstand R9 verursacht. Übersteigt dieser die Spannung UBE (ca. 0,7 Volt) des Transistors V3, wird dieser leitend und reduziert die Gate-Spannung des MOSFETs V2, so daß dieser weiter sperrt (Strombegrenzung). Dies hat wiederum zur Folge, daß die Spannung am DRAIN V2 ansteigt. Diese Spannung wird über den Spannungsteiler (Widerstände R5/R6/R7) und eine Diode D11 an den Kondensator C3 geführt. R5/R6/C3 bilden ein Integrierglied, das in Verbindung mit dem Spannungsteiler R5/R6/R7 so ausgelegt ist, daß die Spannung am DRAIN des MOSFETs V2 mindestens 100 Vs betragen muß, um am Integrier-Kondensator C3 die Schwellenspannung des Schaltelementes IC1D zu überschreiten. Somit ist eine Fehlauslösung der elektronischen Sicherung durch die Strombegrenzung im Einschaltmoment bzw. durch Stromspitzen beim Betrieb von kapazitiven Lasten ausgeschlossen, da in diesen Fällen die Spannung trotz erfolgter Strombegrenzung deutlich unter 100 Vs bleibt (Dies kann über die Größe von R9 eingestellt werden).

Sollte die Schaltung mit Überlast betrieben oder ein Kurzschluß der Last vorliegen, beträgt die Spannung an V2 je nach Grad der Überlastung bis zu 340 Vs, d.h. je höher die Überlastung und somit auch die Verluste am MOSFET V2 sind, um so schneller erreicht C3 die Schwellenspannung am IC1D (PIN12) Der Ausgang IC1D PIN11 wechselt von High nach Low, wenn beide Eingänge High sind. Dies ist jedoch nur der Fall bei eingeschaltetem DMS PIN13 sowie IC1D High und Überlast PIN12 IC1D High. Hierdurch wird verhindert, daß die elektronische Sicherung z.B. durch normales Ausschalten des DMS und somit Netzspannung an V2 und High an IC1D PIN12 aktiviert wird. Sind beide Eingangsbedingungen (PIN12 High u. PIN13 High) erfüllt, wechselt IC1D PIN 11 von High nach Low und sperrt über D10 V2. Somit ist die elektronische Sicherung aktiv und geht in Selbsthaltung, da die jetzt am gesperrten DRAIN V2 anliegende volle Netzspannung mit C3 gepuffert wird, da D11 ein Entladen über R7 verhindert und die Zeitkonstante C3/R11 zu lang ist, um ein Umschalten von ICld zu bewirken. D9 verhindert ein Ansteigen der Spannung auf unzulässig hohe Werte.

Die elektronische Sicherung wird in vorteilhafter Weise in folgenden Fällen deaktiviert:
1. Durch eine Hell-Phase des Dämmerungs-Schalter, da IClb Ausgang PIN4 dann von High nach Low wechselt und somit die Eingangsbedingung für ICld (PIN12 High u. PIN13 High) nicht mehr erfüllt ist, d.h. die elektronische Sicherung überprüft bei jeder neuen Hell/Dunkelperiode, ob die Überlast noch vorhanden ist und reagiert dementsprechend.
2. Durch Abtrennen der Last (Leuchtmittelwechsel), da C3 sich über R11 entladen kann, d.h. Eingangsbedingung IC1d (PIN12 High u. PIN13 High) nicht erfüllt.
3. Durch Spannungsfreischalten der gesamten Elektronik (Reset beim Einschalten durch den Dämmerungs-Schalter über C2 oder IC1a).

## Patentansprüche

1. Elektronische Kurzschlußsicherung für einen Lastschaltkreis, insbesondere für einen Lastschaltkreis eines Dämmerungsschalters für eine Lampe mit einem Photoelement (V1), das bei einem Absinken der Umgebungshelligkeit unter einen Schwellwert einen Schaltvorgang auslöst, **dadurch gekennzeichnet,** daß die elektronische Kurzschlußsicherung einen MOSFET (V2) aufweist, dem ein strombegrenzender Steuertransistor (V3), ein Last-Brückengleichrichter (D1-D4) im Hauptstromkreis des MOSFET, ein Spannungsteiler (R5/R6/R7), ein Integrierglied (R5/R6/C3) sowie ein Widerstand (R9) vorgeschaltet sind, wobei der Widerstand (R9) eine proportionale Spannung zur Steuerung des Transistors (V3) erzeugt und durch diese proportionale Spannung das Integrierglied (R5/R6/C3) eine entsprechende ansteigende Spannung am DRAIN des MOSFET (V2) für die elektronische Kurzschlußsicherung verwendet, so daß eine Fehlauslösung der elektronischen Sicherung durch Stromspitzen im Einschaltmoment und beim Betrieb von kapazitiven Lasten ausgeschlossen ist.

2. Dämmerungsschalter nach Anspruch 1, gekennzeichnet durch eine elektronische Kurzschlußsicherung für einen Lastkreisabschnitt.

3. Dämmerungsschalter nach Anspruch 1 oder 2, gekennzeichnet durch eine einstellbare Ein-/Ausschaltschwelle.

4. Dämmerungsschalter nach einem der vorangegangenen Ansprüche, gekennzeichnet durch eine Auslegung der elektronischen Kurzschlußsicherung derart, daß bei jeder neuen Hell/Dunkelperiode elektronisch geprüft wird, ob eine Überlast anliegt.

5. Dämmerungsschalter nach einem der vorangegangenen Ansprüche, gekennzeichnet durch eine Auslegung der elektronischen Kurzschlußsicherung derart, daß sie bei einem Lastwechsel (Leuchtmittelwechsel) deaktiviert wird.

6. Dämmerungsschalter nach einem der vorangegangenen Ansprüche, gekennzeichnet durch Auslegung der elektronischen Kurzschlußsicherung derart, daß bei einer Störung die Abschaltgeschwindigkeit von der Höhe der Überlast abhängt.

7. Dämmerungsschalter nach einem der vorangegangenen Ansprüche, gekennzeichnet durch eine Auslegung derart, daß bei einem Aus- und Einschalten ein Spannungsfreischalten der gesamten Elektronik erfolgt (Reset beim Einschalten).

8. Dämmerungsschalter nach einem der vorangegangenen Ansprüche, gekennzeichnet durch eine Einrichtung zur Überwachung der Verlustleistung des Leistungsschalters.

9. Dämmerungsschalter nach einem der vorangegangenen Ansprüche, gekennzeichnet durch eine Auslegung für Lasten verschiedener Art, wobei die Lebensdauer der Last durch die elektronische Einschaltstrombegrenzung verlängert wird.

10. Dämmerungsschalter nach einem der vorangegangenen Ansprüche, gekennzeichnet durch einen Schaltungsabschnitt zur Spannungsglättung und -stabilisierung, der eine mit Wechselspannung beaufschlagte Diode (D5), einen in Reihe mit der Diode (D5) geschalteten, strombegrenzenden Widerstand (R10), einen Glättungskondensator (C1) und eine spannungsstabilisierende Zenerdiode (D6) aufweist.

11. Dämmerungsschalter nach einem der vorangegangenen Ansprüche, gekennzeichnet durch einen "NAND"-Schmitt-Trigger (IC1A), dessen beide Eingänge an einem lichtabhängigen Spannungsteiler liegen, der aus einem Widerstand (R2) und einem Phototransistor V1 besteht, wobei ein Zeitschaltelement (Widerstand und Kondensator in Reihe) vorgesehen ist, das ein Schalten aufgrund von Kurzlichteinflüssen vermeidet.

12. Dämmerungsschalter nach einem der vorangegangenen Ansprüche, gekennzeichnet durch einen MOSFET (V2), dem ein strombegrenzender Transistor (V3), ein Last/Brückengleichrichter V2/R9, ein Spannungsteiler (R5/R6/R7) und ein Integrierglied (R5/R6/C3) vorgeschaltet sind.

## Claims

1. Electronic short-circuit safety device for a load-switching circuit, in particular for a load-switching circuit of an ambient-light lamp switch, having a photoelement (V1) which, when the ambient light sinks below a threshold value, activates a switching process, characterised in that the electronic short-circuit safety device has a MOSFET (V2) to which are connected in series a current-limiting control transistor (V3), a load/bridge-connected rectifier (D1-D4) in the main circuit of the MOSFET, a voltage divider (R5/R6/R7), an integrating element (R5/R6/C3) and a resistor (R9), the resistor (R9) producing a proportional voltage for the control of the transistor (V3) and, owing to that proportional voltage, the integrating element (R5/R6/C3) using a corresponding increasing voltage at the DRAIN of the MOSFET (V2) for the electronic short-circuit safety device so that an erroneous activation of the electronic safety device by current spikes at the moment of switching on and when capacitive loads are operated is precluded.

2. Ambient-light switch according to claim 1, characterised by an electronic short-circuit safety device for a load circuit portion.

3. Ambient-light switch according to claim 1 or 2, characterised by an adjustable activation/deactivation threshold.

4. Ambient-light switch according to any one of the preceding claims, characterised by an arrangement of the electronic short-circuit safety device such that, for each new period of light/darkness, electronic testing is performed to determine whether an overload is present.

5. Ambient-light switch according to any one of the preceding claims, characterised by an arrangement of the electronic short-circuit safety device such that it is deactivated in the event of a load change (illuminant change).

6. Ambient-light switch according to any one of the preceding claims, characterised by an arrangement of the electronic short-circuit safety device such that, in the event of a malfunction, the deactivation speed depends on the magnitude of the overload.

7. Ambient-light switch according to any one of the preceding claims, characterised by an arrangement such that, in the event of deactivation and activation, a voltage isolation of the entire electronic system is effected (reset when activated).

8. Ambient-light switch according to any one of the preceding claims, characterised by a device for monitoring the power loss of the circuit-breaker.

9. Ambient-light switch according to any one of the preceding claims, characterised by an arrangement for loads of different types, the service life of the load being extended by the electronic limiting device for the activation current.

10. Ambient-light switch according to any one of the preceding claims, characterised by a circuit portion which is for smoothing and stabilising the voltage and which has a diode (D5) supplied with alternating voltage, a resistor (R10) which is connected in series with the diode (D5) and which limits the current, a smoothing capacitor (C1) and a Zener diode (D6) which stabilises the voltage.

11. Ambient-light switch according to any one of the preceding claims, characterised by a "NAND" Schmitt trigger (IC1A) whose two inputs are arranged at a light-dependent voltage divider which comprises a resistor (R2) and a phototransistor (V1), a timer element (resistor and capacitor in series) being provided which prevents switching caused by brief light influences.

12. Ambient-light switch according to any one of the preceding claims, characterised by a MOSFET (V2) to which a current-limiting transistor (V3), a load/bridge-connected rectifier V2/R9, a voltage divider (R5/R6/R7) and an integrating element (R5/R6/C3) are connected in series.

## Revendications

1. Circuit électronique de protection contre les court-circuits pour un circuit de charge, notamment pour un circuit de charge d'un interrupteur crépusculaire pour une lampe comportant un élément photosensible (V1), qui, lorsque la luminosité ambiante tombe au-dessous d'une valeur de seuil, déclenche un processus de commutation, caractérisé en ce que le circuit électronique de protection contre les court-circuits comporte un transistor MOSFET (V2), en amont duquel sont branchés un transistor de commande (V3) servant à limiter le courant, un redresseur en pont de charge (D1-D4) situé dans le circuit principal du transistor MOSFET, un diviseur de tension (R5/R6/R7), un circuit intégrateur (R5/R6/C3) ainsi qu'une résistance (R9), la résistance (R9) produisant une tension proportionnelle pour la commande du transistor (V3), tandis que sous l'effet de cette tension proportionnelle, le circuit intégrateur (R5/R6/C3) utilise une tension croissante correspondante au niveau du DRAIN du transistor MOSFET (V2) pour le dispositif électronique de protection contre les court-circuits, de sorte qu'un déclenchement erroné du dispositif électronique de sécurité par des pointes de courant au moment du branchement et lors du fonctionnement de charges capacitives est exclu.

2. Interrupteur crépusculaire selon la revendication 1, caractérisé par un dispositif électronique de protection contre les court-circuits pour une section de circuit de charge.

3. Interrupteur crépusculaire selon la revendication 1 ou 2, caractérisé par un seuil réglable de branchement/débranchement.

4. Interrupteur crépusculaire selon l'une des revendications précédentes, caractérisé par un agencement tel du dispositif électronique de protection contre les courts-circuits que, pour chaque nouvelle période claire/sombre, un contrôle est exécuté pour déterminer s'il existe une surcharge.

5. Interrupteur crépusculaire selon l'une des revendications précédentes, caractérisé par un agencement tel du dispositif électronique de protection contre les court-circuits qu'il est désactivé dans le cas d'un changement de charge (changement de moyen d'éclairement).

6. Interrupteur crépusculaire selon l'une des revendications précédentes, caractérisé par un agencement tel du dispositif électronique de protection contre les court-circuits que, dans le cas d'une perturbation, la vitesse de coupure dépend de l'intensité de la surcharge.

7. Interrupteur crépusculaire selon l'une des revendications précédentes, caractérisé par un agencement tel que dans le cas d'un branchement et d'un débranchement, il se produit une déconnexion de tension de l'ensemble du système électronique (remise à l'état initial lors du branchement).

8. Interrupteur crépusculaire selon l'une des revendications précédentes, caractérisé par un dispositif servant à contrôler la puissance dissipée de l'interrupteur de puissance.

9. Interrupteur crépusculaire selon l'une des revendications précédentes, caractérisé en ce qu'il est conçu pour des charges de différents types, la durée de vie de la charge étant prolongée par la limitation électronique du courant de branchement.

10. Interrupteur crépusculaire selon l'une des revendications précédentes, caractérisé par une section de circuit pour lisser et stabiliser la tension, qui comprend une diode (D5) chargée par une tension alternative, une résistance (R5) de limitation du courant, branchée en série avec la diode (D5), un condensateur de lissage (C1) et une diode Zener (D6) de stabilisation de la tension.

11. Interrupteur crépusculaire selon l'une des revendications précédentes, caractérisé par un déclencheur de Schmitt "NON-ET" (IC1A), dont les deux entrées sont connectées à un diviseur de tension qui fonctionne en fonction de la lumière et est constitué par une résistance (R2) et un phototransistor (V1), et il est prévu un élément de temporisation (résistance et condensateur branchés en série), qui évite une commutation sur la base d'influences d'une lumière de brève durée.

12. Interrupteur crépusculaire selon l'une des revendications précédentes, caractérisé par un transistor MOSFET (V2), en amont duquel sont branchés un transistor (V3) de limitation du courant, une charge/un redresseur en pont (V2/R9), un diviseur de tension (R5/R6/R7) et un circuit intégrateur (R5/R6/C3).
